# EUROPEAN PATENT SPECIFICATION

(11) **EP 3 333 605 B1**
(45) Date of publication and mention of the grant of the patent: **20.11.2019**
(21) Application number: 16202646.2
(22) Date of filing: 07.12.2016
(51) Int. Cl.: G02B 6/122, B41J 2/01, G01N 21/25, B41J 2/06

(54) **PHOTONIC DEVICE**
PHOTONISCHE VORRICHTUNG
DISPOSITIF PHOTONIQUE

(43) Date of publication of application: 13.06.2018
(73) Proprietor: Hitachi, Ltd., Tokyo (JP); Cambridge Enterprise Limited, Cambridge CB2 1TN (GB)
(72) Inventor: BROSSARD, Frederic, Cambridge CB3 0HE (GB); PECUNIA, Vincenzo, Cambridge CB3 0HE (GB)
(74) Representative: Piotrowicz, Pawel Jan Andrzej

(56) References cited:
- EP-A1- 1 677 130
- JP-A- 2003 131 003
- JP-B2- 4 289 487
- YAFANG TAN ET AL: "Photonic crystal enhancement of a homogeneous fluorescent assay using submicron fluid channels fabricated by E-jet patterning", JOURNAL OF BIOPHOTONICS, vol. 7, no. 3-4, 23 December 2013 (2013-12-23), pages 266-275, XP055348278, DE ISSN: 1864-063X, DOI: 10.1002/jbio.201300158
- JANG-UNG PARK ET AL: "High-resolution electrohydrodynamic jet printing", NATURE MATERIALS, vol. 6, no. 10, 5 August 2007 (2007-08-05) , pages 782-789, XP055348343, GB ISSN: 1476-1122, DOI: 10.1038/nmat1974
- SUTANTO E ET AL: "Paper;A multimaterial electrohydrodynamic jet (E-jet) printing system;A multimaterial electrohydrodynamic jet (E-jet) printing system", JOURNAL OF MICROMECHANICS & MICROENGINEERING, INSTITUTE OF PHYSICS PUBLISHING, BRISTOL, GB, vol. 22, no. 4, 15 March 2012 (2012-03-15) , page 45008, XP020221239, ISSN: 0960-1317, DOI: 10.1088/0960-1317/22/4/045008
- ERICK SUTANTO ET AL: "Electrohydrodynamic jet printing of micro-optical devices", MANUFACTURING LETTERS, vol. 2, no. 1, 1 January 2014 (2014-01-01) , pages 4-7, XP055348351, ISSN: 2213-8463, DOI: 10.1016/j.mfglet.2013.10.007
- M. MARCONI ET AL: "Asymmetric mode scattering in strongly coupled photonic crystal nanolasers", OPTICS LETTERS, vol. 41, no. 24, 2 December 2016 (2016-12-02), page 5628, XP055348728, ISSN: 0146-9592, DOI: 10.1364/OL.41.005628

## Description

### Field of the Invention

The present invention relates to a photonic device and to a method of forming a photonic device.

### Background

It is known to fabricate microphotonic devices in a number of different ways.

One approach involves depositing of a thin layer of a low-refractive index material on top of a photonic crystal waveguide. S. Gardin et al.: "Microlasers based on effective index confined slow light modes in photonic crystal waveguides", Optics Express, volume 16, pages 6331-6339 (2008) describes a low modal volume microlaser based on a line-defect 2D-photonic crystal waveguide. Lateral confinement of low-group velocity modes is controlled by post-processing of 1 to 3 µm-wide PMMA strips on a two-dimensional photonic crystal waveguide. In another example, S. Prorok et al.: "Configurable silicon photonic crystal waveguides", Applied Physics Letters, volume 103, page 261112 (2013) discloses electron-beam bleaching of a chromophore doped polymer cladding. This approach, however, depends on the low-index material being sensitive to electron-beam or ultraviolet light which limits the number of materials which can be used. Furthermore, these materials are applied by spin-coating and so cover the whole surface of the sample which may not be desirable.

Another approach involves localised deposition of carbonaceous material using an electron-beam-induced method such as that described in M-K. Seo et al.: "Wavelength-scale photonic-crystal laser formed by electron-beam-induced nano-block deposition", Optics Express, volume 17, pages 6790-6798 (2009). This approach too is material-dependent.

A further approach involves infiltrating air-holes in a photonic crystal as described in S. Tomljenovic-Hanic et al.: "Design of high-Q cavities in photonic crystal slab heterostructures by air-holes infiltration", Optics Express, volume 14, pages 12451 to 12456 (2006) and S. Tomljenovic-Hanic & C. M. Sterke: "Reconfigurable, Defect-Free, Ultrahigh-Q Photonic Crystal Microcavities for Sensing", Sensors, volume 13, pages 3262 to 3269 (2013). Reference is also made to A. C. Bedoya et al.: "Reconfigurable photonic crystal waveguides created by selective liquid infiltration", Optical Express, volume 20, pages 11046 to 11056 (2012). US 2009/0103884 A1 and F. Intonti et al.: "Rewritable photonic circuits", Applied Physics Letters, volume 89, page 211117 (2006) describe selectively injecting a micro-quantity of a liquid into predetermined air holes. Although this technique can be used with a range of different materials, it is not suited for larger holes or through-holes or for where hole sizes are smaller than the needle tip. L. C. Smith et al.: "Reconfigurable microfluidic photonic crystal slab cavities", Optics Express, volume 16, 15887 (2008) describes controlling the size of a selectively-infiltrated region of air holes with fluid using a glass needle. This approach suffers the drawback that fluid is deposited by dragging the needle between a fluid reservoir and the area of interest on the photonic crystal which tends to limit the distance between the reservoir and the area in which air holes are infiltrated. Also, this approach cannot be used to create point-like microcavities.

Finally, another approach involves inkjet printing. J. Wang et al.: "Patterned photonic crystals fabricated by inkjet printing", Journal of Materials Chemistry C, volume 1, page 6048 (2013) formation of a photonic by self-assembly of inkjet-printed colloidal nanoparticles. C. Zhang et al.: "Organic printed photonics: From microring lasers to integrated circuits", Science Advances, page 1 (2015) describes fabrication of microring cavities by direct printing of an organic material on a low refractive index substrate. Round cavities are obtained by locally dissolving organic material with 100 µm-wide solvent droplets. Despite the large size of droplet, a feature size as small as 5 µm can be achieved at the edge of the droplet by making use of coffee-ring-like effect.

Yafang Tan et al: "Photonic crystal enhancement of a homogeneous fluorescent assay using submicron fluid channels fabricated by E-jet patterning", Journal of Biophotonics, volume 7, pages 266-275 (2013) describes enhancement of a a liquid-based homogenous fluorescence assay using the resonant electric fields from a photonic crystal (PC) surface in the form of a one-dimensional grating structure.

US 2009/0103884 A1 describes a method for the creation of a rewritable photonic device inserted in a photonic crystal having a plurality of cavities; this method comprises the operation of injecting selectively a micro-quantity of a liquid into predetermined cavities so as to allow the introduction of permitted states within the photonic band gap of the crystal or modification of the prohibited states.

JP 4 289 487 B2 describes a method to solve the problem associated with conventional technology so as to easily manufacture a microstructure such as three dimensional photonic crystals or the like by making vertical through-put holes with a prescribed interval on a substrate and by hierarchically filling a plurality of filling materials into the holes with a prescribed thickness having a different refractive index from that of the substrate. The solution describes how vertical through-put holes are formed with a prescribed interval on a substrate made of the material having a first refractive index. Then, a plurality of filling materials having refractive indexes, which differ from the first refractive index, is hierarchically filled into the vertical through-put holes with a prescribed thickness to manufacture a microstructure such as photonic crystals or the like.

JP2003649459 describes a method of forming a photonic-crystal layer corresponding to a pattern on a base material. The patterns on the base material are alternately arranged in the formed layer by pattern printing methods including inkjet printing.

### Summary

According to a first aspect of the present invention there is provided a method of forming a photonic device according to claim 1 and a photonic device according to claim 11.

According to a second aspect of the present invention there is provided a method of forming a photonic device according to claim 10 and a photonic device according to claim 12.

### Brief Description of the Drawings

Certain embodiments of the present invention will now be described, by way of example, with reference to the accompanying drawings, in which:
Figure 1a schematically illustrates a method of fabricating a first type of microphotonic device which comprises a hole-based photonic crystal and strip of material printed on the photonic crystal using inkjet printing;
Figure 1b is a schematic plan view of the microphotonic device shown in Figure 1a;
Figures 2a, 2b and 2c are schematic plan views of different microphotonic devices comprising differently-shaped microcavities defined by different shapes of inkjet-printed layers;
Figure 2d is a schematic plan view of microphotonic device comprising a waveguide defined by an inkjet-printed layer;
Figures 3a, 3b, 3c, 3d are schematic cross-sectional views of different ink deposition arrangements, with 3c not belonging to the invention;
Figure 4a is schematic cross-sectional view of a second type of microphotonic device which comprises a hole-based photonic crystal and two co-planar regions of material printed on the photonic crystal using inkjet printing;
Figure 4b is a schematic plan view of the microphotonic device shown in Figure 4a;
Figure 5a is schematic cross-sectional view of a third type of microphotonic device which comprises a pillar-based photonic crystal and two co-planar regions of material printed in and on the photonic crystal using inkjet printing;
Figure 5b is a schematic plan view of the microphotonic device shown in Figure 5a;
Figures 6a is a plot of calculated optical field strength for a microphotonic device having an upper disc-shaped layer of material printed on the photonic crystal using inkjet printing and a bottom air cladding;
Figures 6b is a plot of calculated optical field strength for a microphotonic device having an upper disc-shaped layer of material printed on the photonic crystal using inkjet printing and a silicon dioxide cladding;
Figure 6c is a plot of calculated optical field strength for a microphotonic device having an upper strip-like layer of material printed on the photonic crystal using inkjet printing and a bottom air cladding;
Figure 7aa is an AFM image of a microphotonic device having an upper strip of PMMA having a thickness of 50 nm printed on a photonic crystal using inkjet printing,
Figure 7ab is a photoluminescence spectra for the device shown in Figure 7aa;
Figure 7ac is photoluminescence intensity spatial plot for the device shown in Figure 7aa;
Figure 7ba is an AFM image of a microphotonic device having an upper disc of PMMA having a thickness of 50 nm printed on a photonic crystal using inkjet printing,
Figure 7bb is a photoluminescence spectra for the device shown in Figure 7ba;
Figure 7bc is photoluminescence intensity spatial plot for the device shown in Figure 7ba;
Figure 7ca is an AFM image of a microphotonic device having two crossed strips of PMMA having a thickness of 50 nm printed on a photonic crystal using inkjet printing, Figure 7cb is a photoluminescence spectra for the device shown in Figure 7ca;
Figure 7cc is photoluminescence intensity spatial plot for the device shown in Figure 7ca;
Figure 8aa is an AFM image of a microphotonic device having an upper strip of PMMA having a thickness of 50 nm printed on a photonic crystal using inkjet printing;
Figure 8ab is a set of photoluminescence spectra for a microphotonic device having an upper strip with 1, 2, 3, 4, and 5 overlying layers of PMMA;
Figure 8ba is an AFM image of a microphotonic device having two crossed strips 25 nm thick each of PMMA each having a thickness of 25 nm printed on a photonic crystal using inkjet printing;
Figure 8bb is a set of photoluminescence spectra for a microphotonic device having an upper strip with two overlying layers of PMMA in one direction (X or Y) and an upper strip with 1 overlying layer of PMMA in a direction perpendicular to the first one ("2,1"), an upper strip with 2 overlying layers of PMMA in each direction ("2,2"), and an upper strip with 2 overlying layers of PMMA in one direction (X or Y) and 3 overlying layers of PMMA in a direction perpendicular to it ("2,3");
Figure 9a is an AFM image of a photonic molecule formed from two nominally-identical printed strips on top of a uniform photonic crystal waveguide;
Figure 9b is a photoluminescence spectra from a cavity fabricated from a two overlying layers on a photonic crystal waveguide, wherein the cavity supports a single mode Mo;
Figure 9c is a photoluminescence spectra from a cavity fabricated from two identical printed strips with two overlaid passes separated by 3 µm on a photonic crystal waveguide showing that a ground mode Mo has been split into a low-energy symmetric supermode (S) and a higher-energy antisymmetric supermode (AS);
Figure 9d is a photoluminescence spectra collected along the photonic crystal waveguide showing the mode profile of the symmetric supermode (S) and antisymmetric supermode (AS) overlapping both strips; and
Figure 10 is a graph of mode splitting of the photonic molecule as a function of the separation between two printed strips showing control of coupling strength using the printer positioning stage.

### Detailed Description of Certain Embodiments

Microphotonic circuits with functional materials can be fabricated using a high-resolution inkjet printer and a photonic crystal template. Femtolitre droplets of ink containing a functional material is projected onto the surface of the photonic crystal resulting in a locally-deposited, thin (e.g. < nm) layer of functional material. The thin layer locally perturbs the photonic lattice of the photonic crystal, thereby creating defects in the photonic bandgap. The defects can be used to create optical microcavities and waveguides. The photonic crystal template may be an array of air-holes made from an inorganic material (for example a CMOS-compatible material such as silicon) and can be processed using existing microfabrication techniques.

Fabrication is self-aligned, scalable and allows the selective deposition of different materials at multiple locations on the same chip and can be performed at a high throughput. The deposited material can be washed away from the photonic crystal template with appropriate orthogonal solvent. The photonic crystal template can, therefore, be re-used. The circuits can be used in a wide variety of applications ranging from bio sensing to quantum optics.

The functional material can take the form of nanoparticles, carbon nanotubes, graphene oxide, quantum dots, DNA molecules, light emitting small molecules, polymers, and block-copolymers. The ink may also include a tuneable material such as a photochromic, electro-optic, thermochromic or chalcogenide compound to form tuneable photonic circuits.

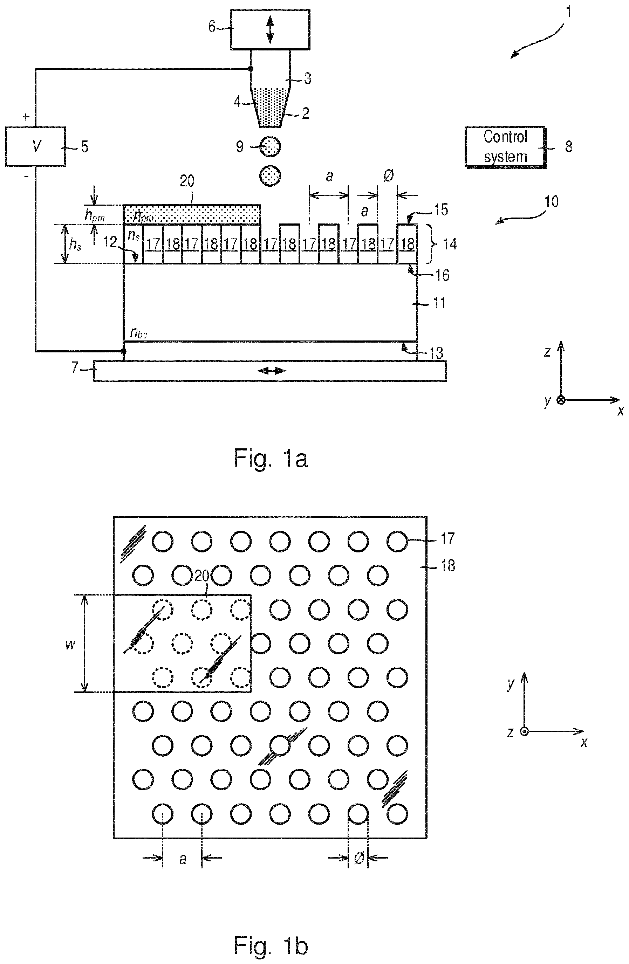

Referring to Figure 1, a high-resolution inkjet printer 1 is shown.

The high-resolution inkjet printer 1 includes a nozzle 2 which includes a reservoir 3 for holding an ink 4 comprising a functional material, a voltage source 5, a nozzle positioning stage 6, a workpiece positioning stage 7 and a computer-based control system 8. The inkjet printer 1 is capable of projecting femtolitre (e.g. < 1 pL) droplets 9 of ink 4 onto a workpiece 10 and capable of producing lines having a linewidth less than or equal to 10 µm. An example of a suitable inkjet system 1 is the Sub Femt Ink Jet Printer available from SIJTechnology, Inc., Tsukuba, Japan.

The workpiece 10 comprises an optional bottom (or "base") cladding layer 11 (or "substrate") having a first and second opposite faces 12, 13, a two-dimensional photonic crystal layer 14 having first and second opposite face 15, 16 (hereinafter referred to as "upper and lower faces" or "upper and lower surfaces") disposed on the first face 12 of the bottom cladding layer 11 and comprising an array of optical scatterers 17 embedded in a matrix 18. The photonic crystal layer 14 may be considered to be a core of the optical waveguide, similar to a core of an optical fibre. The bottom cladding layer 11 may comprise a dielectric material, such as silicon dioxide.

The optical scatterers 17 take the form of holes (also referred to as "air-holes") extending into or through the photonic crystal 14 from the upper face 15 which defines a principal surface of the photonic crystal 14. The holes 17 are preferably through-holes extending through the photonic crystal 14 between the upper and lower faces 15, 16.

The nozzle 2 is located over the upper surface 15 of the photonic crystal 14 and, in response to a suitable electric field being applied between the nozzle 2 and workpiece 10, ink droplets 9 are projected onto the upper surface 15 of the photonic crystal template 14 to form a layer 20 of functional material.

The large surface-to-volume ratio of femtolitre ink droplets enhances drying rate and viscosity. As a result, a thin (e.g. < nm) layer 20 of functional material can be deposited on the surface 15 of a photonic crystal 14. A wide range of ink formulations can be used, including even solvents having high boiling points (e.g. > 100 °C). This may be contrasted with picolitre droplets used in conventional inkjet printing (for example, based on piezo- and thermally-driven jetting), which inherently lead to longer drying times and, consequently, may be affected by de-wetting issues (i.e. displacement of printed material to the side of the photonic crystal membrane prior to drying). The ink 4 comprises a mixture of a small molecule in the form of a spirooxazine and a polymer in the form of polymethyl methacrylate (PMMA) dissolved in 1,2-dichlorobenzene (which has a boiling point of 180 °C).

The area covered by a single droplet 9 can be as small as a micrometre in diameter and sub-100 nm in thickness. This diameter typically corresponds to a few photonic lattices when considering applications at telecom wavelengths, for example around 1.3 µm and around 1.5 µm. Multiple droplets 9 can form micrometre-wide strips of materials when the workpiece 10 is translated during patterning.

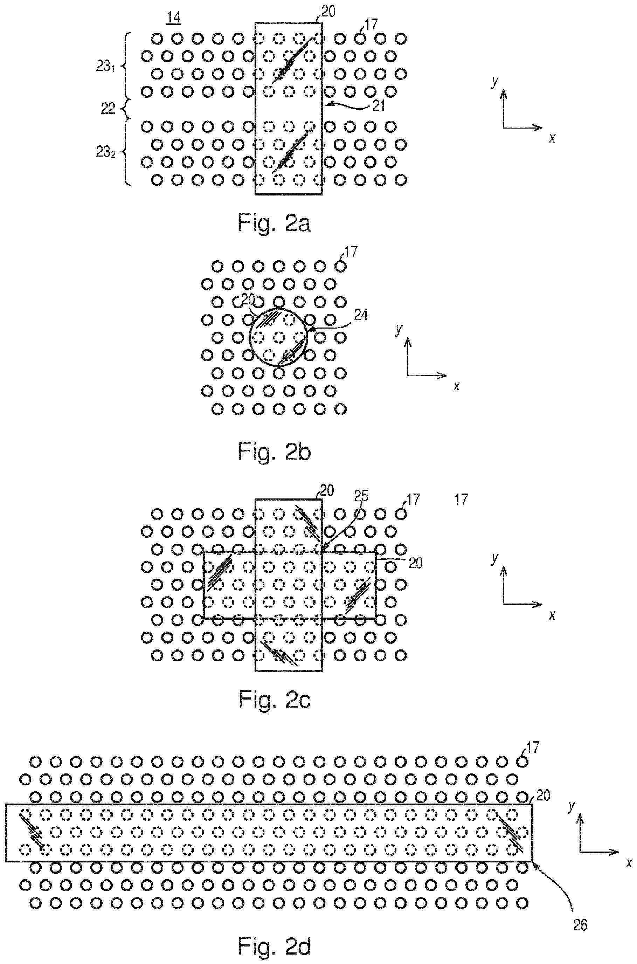

Figures 2a to 2d show a variety of different patterns for the layer 20 of functional material.

Referring to Figure 2a, a microcavity 21 can be formed using a patterned photonic crystal. In particular, a microcavity 21 can be formed where an elongate waveguide 22, defined between first and second arrays 231, 232 of through-holes 17, and a rectangular layer 20 of functional material, which runs transversely across the waveguide 22, intersect. Between the first and second arrays 231, 232, there is an absence of through-holes 17. The microcavity 21 forms where the local refractive index is the largest which here corresponds to the intersection of the waveguide 22 and the rectangular layer 20. Due to the presence of the waveguide, a defect is created inside the photonic bandgap and, thus, is strongly confined in the plane of the photonic crystal 14. The perturbation is small so as to limit losses due to scattering. Thus, a layer 20 having a thickness, *hₚₘ,* which is a fraction of the photonic lattice constant, a, is considered.

Referring to Figure 2b, a microcavity 24 can be formed using a uniformly-patterned photonic crystal. In this case, a perturbation, locally-defined and limited in all directions in the plane of the photonic crystal, is used. This perturbation is sufficiently strong to create a defect mode within the photonic bandgap. Thus, such mode can be obtained using a thin, disc-shaper layer 20 of material deposited on the surface 15 (Figure 1) of the photonic crystal 14.

Referring to Figure 2c, a microcavity 25 can be formed using two intersecting rectangular layers 20, i.e. strips, of functional material on the surface 15 (Figure 1) of the photonic crystal 14. The thickness of the layers 20 at the intersection of the strips 20 is greater than elsewhere along the strips 20.

Referring to Figure 2d, a photonic waveguide 26 can be formed by using an elongate rectangular layer deposited along the Γ-k direction of the photonic lattice.

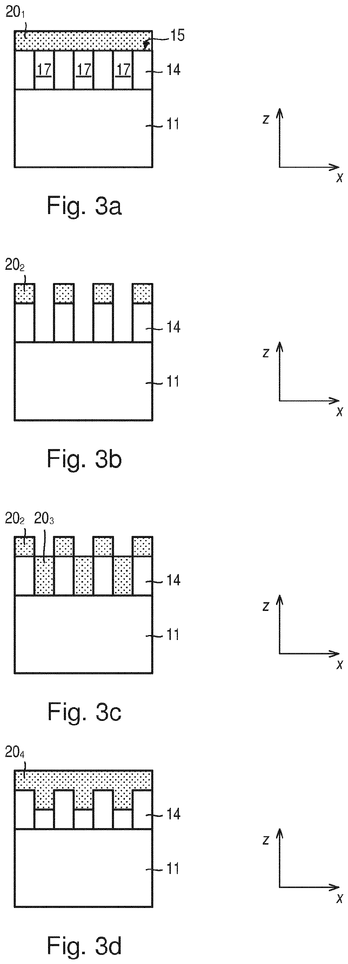

Figures 3a to 3c show a variety of different ways in which ink may form layers 20 on and/or in the photonic crystal 14. Different layer configurations depend on the properties of the ink 4 and of the surface 15 (Figure 1)

Referring to Figure 3a, material can be printed so as to form a continuous (or "unbroken") layer 201 on top of the photonic crystal 14, spanning the through-holes 17.

Referring to Figure 3b, material can be printed so as to form a perforated layer 202 which lies on top the mesh 20 of the photonic crystal 14, but not the through-holes 17.

Referring to Figure 3c, which does not form part of the invention, material can be printed so as not only to form a perforated layer 202 on top the mesh 20 of the photonic crystal 14, but also an infiltrated layer 203 which at least partially fills through-holes 17 in the printed region.

Referring to Figure 3d, material can be printed so as to form a continuous layer 204 on top of the photonic crystal 14, spanning the through-holes 17, and which also partially fills through-holes 17.

All three different ways of creating the layers can lead to the creation of microcavities or photonic crystal waveguides. The different approaches may result in different levels of strength of perturbation and, thus, how well confined the optical mode is in the plane of the photonic crystal. By carefully designing the photonic crystal and adjusting the thickness and lateral dimensions of the deposited material, it is possible to obtain well-confined, high-Q optical modes.

Referring again to Figure 1a, a preferred method of fabricating microphotonic circuits includes projecting an ink 4 containing one or more functional materials onto the surface 15 of a two-dimensional photonic crystal 14.

The photonic crystal 20 preferably is made from an inorganic material, such as silicon, fabricated by deep UV or e-beam lithography followed by reactive ion etching. The photonic crystal 20 has a refractive index which is greater than the printed material and the bottom cladding 11, i.e. *nₛ* > *nₚₘ*, *n_{bc}*. The bottom cladding 11 can be formed from an oxide, such as SiO2.

As mentioned earlier, the bottom cladding layer 11 can be omitted and, instead, the bottom cladding may be provided by air. This may be achieved by removing the bottom cladding layer 11 from the backside 13 using a selective wet etch, such as buffered hydrofluoric acid.

For applications at telecom wavelengths (i.e. around 1.3 µm and around 1.5 µm), the photonic crystal lattice spacing, *a*, may have a value in a range 300 nm ≤ *a* ≤ 500 nm and have a hole diameter 150 nm ≤ Ø ≤ 250 nm. The thickness of the photonic crystal, *hₛ,* is smaller than the photonic crystal lattice spacing, *a*.

The thickness of the printed material, *hₚₘ,* is preferably a fraction of the thickness of the photonic crystal 14 so as to maintain a high-performing device. For example, 0.05.*hₛ* ≤ *hₚₘ* ≤ 0.3.*hₛ*.

The thickness of the printed layer 17 is kept small to limit losses. Losses can originate from two sources, namely from radiative scattering at the edge between printed and non-printed areas of the photonic crystal 14 and from TE-TM mode coupling due to the break in the vertical symmetry of the structure. Thus, the structure preferably should have a gentle in-plane transition and exhibit out-of-plane symmetry. This can be approximated by keeping the printed layer as thin as possible, whilst still maintaining a confined optical mode in the plane of the photonic crystal 14.

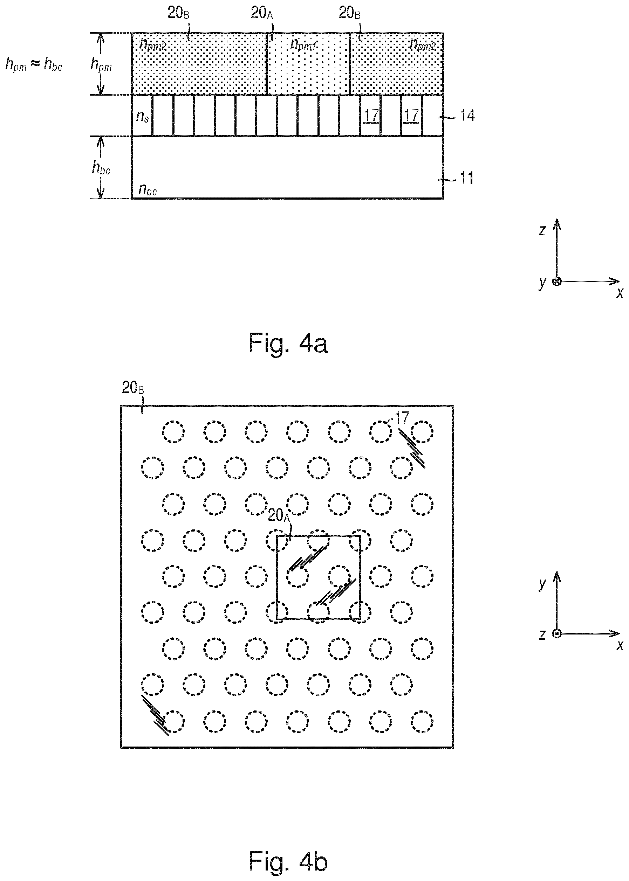

Referring to Figures 4a and 4b, an arrangement is shown in which two co-planar layers 20_{A}, 20_{B} of functional material having different values of refractive index are used. In particular, a first layer 20_{A} is embedded or inlaid into a window in second layer 20_{B}.

The first layer 20_{A} having a refractive index, *nₚₘ₁,* which is as close as possible to the bottom cladding refractive index, *n_{bc}*, is printed where the microcavity or waveguide should be defined. By printing this material with same thickness as the bottom cladding, i.e. *hₚₘ* ≈ *h_{bc}*, it is possible to provide vertical symmetry.

The second layer 20_{B} having a refractive index, *nₚₘ₂,* which is lower than that of the first layer 20_{A}, i.e. *nₚₘ₂ < nₚₘ₁,* is printed around the cavity or waveguide and with same thickness. The outer region 20_{B} need only extend for a distance of about 10 photonic lattices, *a*, around the central region 20_{A} to maintain a high Q confined mode. The central region 20_{A} creates a defect mode in the photonic lattice in the same way as the example shown in Figure 1a. The index contrast, *nₚₘ₂* - *nₚₘ₁* is chosen to be sufficiently small to maintain a gentle lateral transition, whilst allowing a confined mode. The vertical symmetry is maintained at the region where the photonic devices are defined.

In the examples hereinbefore described, the photonic crystal template takes the form of a two-dimensional array of air holes 17 in a matrix 19.

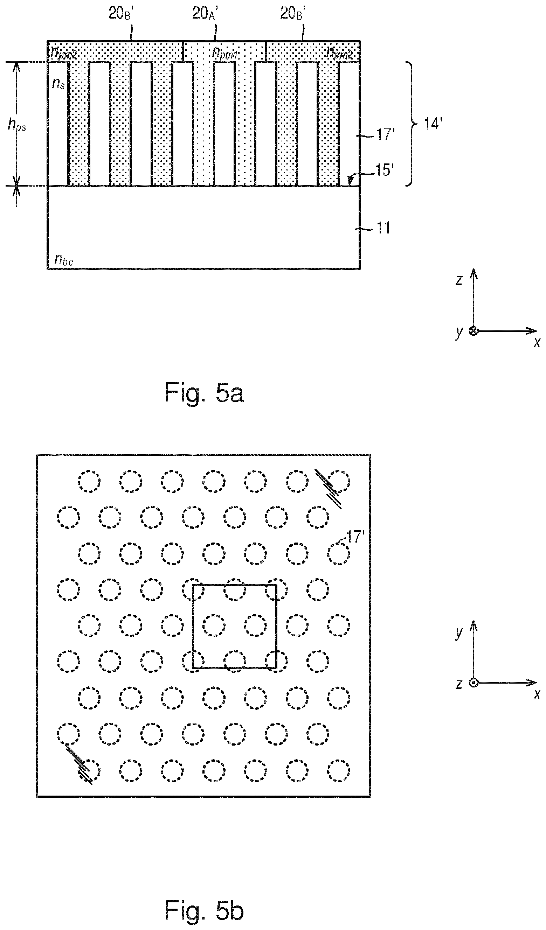

Referring to Figures 5a and 5b, inkjet printing can be used to form devices using a two-dimensional array of pillars 17' which forms a photonic crystal 14'. In this case, the pillars 17' upstand from an upper surface 15' which defines a principal surface.

High Q cavities can be fabricated in such structures by filling-up void space between the pillars 17' with a material 20_{A}' with refractive index similar to that of the bottom cladding and by locally reducing the pillar diameters. This is equivalent to locally reducing the refractive index of the photonic crystal 14'. A second material can be used 20_{B}' outside a central region 20A' similar to the arrangement shown in Figures 4a and 4b. However, unlike the arrangement shown in Figures 4a and 4b, in the arrangement shown in Figures 5a and 5b, *nₚₘ₂ > nₚₘ₁* is used to create a defect. The pillars 17' have a height, *hₚₛ,* is about 1 µm for applications at telecom wavelengths. The lattice constant is similar to a photonic crystal with air-holes.

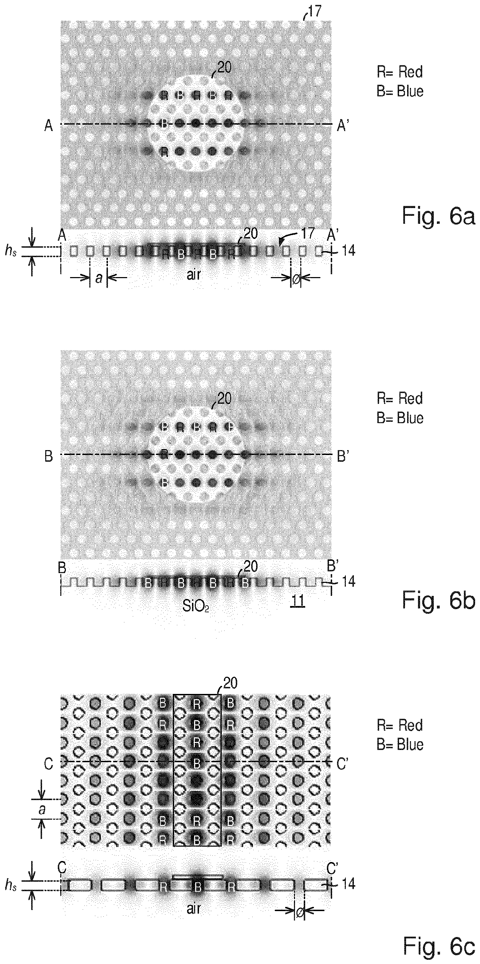

Referring to Figures 6a, 6b, 6c, calculated optical field strengths for different combination of printed layer shapes and bottom cladding are shown. The numerical models demonstrate the formation of microcavities.

Figures 6a and 6b show examples of cavities formed using a thin disk of material 20 on respective photonic crystals. In this case, the disks have a diameter of 2.5 µm, a refractive index *nₚₘ* of 1.45 and a thickness *hₚₘ* of 0.15 × a, i.e. about 60 nm. The disks 20 sit on top of a photonic crystal slab formed from silicon with a refractive index of 3.4, slab thickness *hₛ* of 0.5 × *a*, i.e. about 200 nm and a hole diameter ∅ of 0.54 × *a*, i.e. about 200 nm, where *a* is the photonic lattice constant of the photonic crystal, which is 400 nm for telecom-wavelength.

Figure 6a shows an arrangement in which the photonic crystal 14 takes the form of a suspended membrane. Thus, in the arrangement shown in Figure 6a, the bottom cladding takes the form of an air bottom cladding.

Figure 6b shows an arrangement in which the photonic crystal is supported on a silicon dioxide bottom cladding layer 11.

In both cases, numeral simulation show formation of a high-Q microcavity with Q > 10⁵ and a strongly-confined optical mode with small mode volume *V* < 2(λ_{*o*/}*nₛ*)³ emitting at 1.3 µm.

Figure 6c shows a photonic waveguide arrangement formed by a thin, narrow strip of low refractive index material 20 deposited along the Γ-k direction of the photonic lattice. The strip 20 which is about 1 µm wide and 60 nm thick.

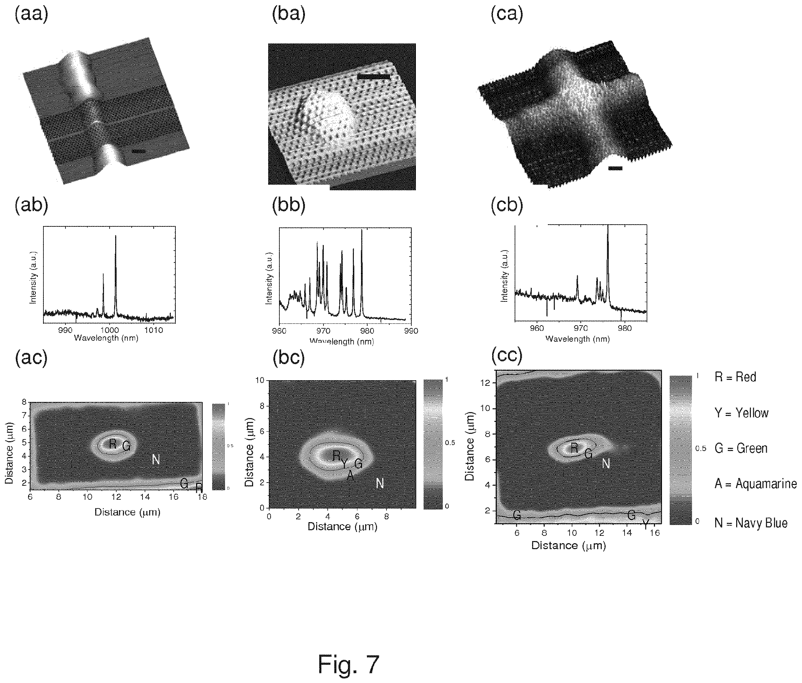

Referring to Figures 7aa, 7ba, 7ca show first, second and third devices formed by inkjet printing PMMA on a photonic crystal 14 using a Sub Femt Ink Jet Printer.

Referring to Figure 7aa, a first device is shown which is formed by inkjet printing a strip 20 of PMMA on a photonic waveguide 14.

Referring also to Figures 7ab and 7ac, photoluminescence spectrum and photoluminescence mappings for the first device shows strongly confined cavity modes with sharp resonances created by the printed strip 20. The cavity has a Q-factor and photoluminescence spectra comparable to e-beam written cavities in the same wafer.

Referring to Figure 7ba, a second device is shown formed by inkjet printing a disk 20 of PMMA using a single droplet, having a diameter of 1 µm and which is 50 nm thick on a blank photonic crystal 14.

Referring also to Figures 7bb and 7bc, the ground mode shown in the photoluminescence spectrum and photoluminescence mapping corresponds to the calculated mode shown in Figure 6a.

Referring to Figure 7ca, a third device is shown formed by inkjet printing two intersecting strips of PMMA on a blank photonic crystal 14. At the intersection, the thickness of the two layers is about 50 nm thick. This approach can help to reduce variability in single droplet deposition.

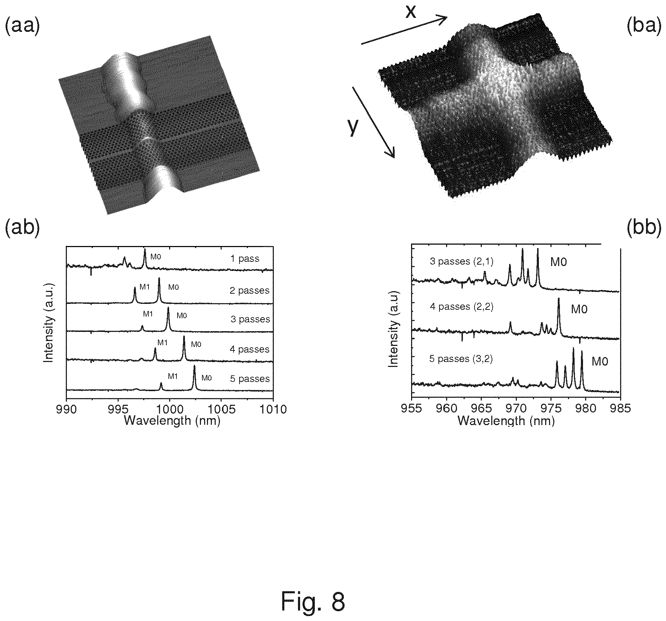

Referring to Figures 8aa, 8ab, 8ba and 8bb, the high level of control of the fabrication method is demonstrated. Figures 8ab and 8bb show tunability of the cavity resonances by varying the number of overlaid printer passes. The strip thickness can be increased from about 5 nm to 15 nm per pass depending on ink formulation and printing parameters, with little change in the strip width.

Figure 8ab shows a set of photoluminescence spectra showing about 1 nm shift in cavity resonance per printer pass for a printed strip on a photonic crystal waveguide template. Referring to Figure 8bb, using the intersecting strip design on a blank photonic crystal template, it is possible to obtain 3 nm tuning per pass.

Such fine tuning of the cavity modes can be of great utility. A small local perturbation of the photonic crystal lattice is made possible by the deposition of femtolitre droplets of a low refractive index material on a high refractive index substrate where most of the optical mode energy is confined. This can help to make the cavity system robust to nonuniformity in the printing process.

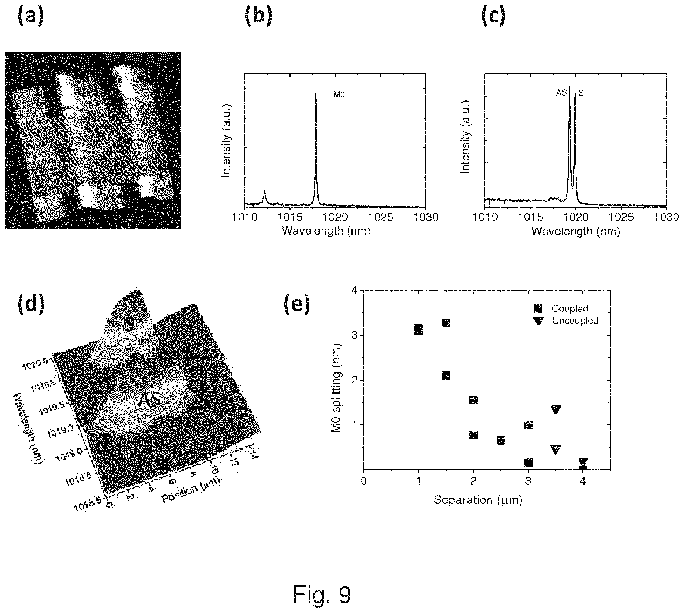

Referring to Figure 9a, a photonic molecule fabricated using the inkjet process is shown. The photonic molecule is formed from two, coupled identical cavities. To fabricate the photonic molecule, a pair of strips are printed side-by-side. Separation of the strips is controlled by the micrometre stage 7 (Figure 1a) of the inkjet printer 1. In this example, each strip is formed using two overlaid printer passes and have an estimated strip thickness of 20 nm.

Referring to Figure 9b, for a single strip, a single mode cavity is exhibited.

Referring to Figure 9c, for two strips separated by 3 µm, mode splitting of two strongly-coupled cavities is shown.

Referring also to Figure 9d, the strongly-coupled system is confirmed by the presence of the symmetric and antisymmetric supermodes in the photoluminescence map.

Referring also to Figure 9e, using the inkjet printer 1 (Figure 1) it is also possible to control the energy splitting of the photonic molecule by varying the distance between the printed strip. The photonic molecule shown here is a clear demonstration of the scalability, reproducibility and versatility of the fabrication method.

Functional materials, such as photochromic or chalcogenide compounds, can be added to the printer ink to provide, for example, optically-tuneable microphotonic circuits. Electrically tuneable materials could be added to the printer ink and electrodes can be printed next to the microphotonic circuits to provide electro-optic control of the circuits.

Photonic crystals have the ability to provide high-quality, strongly-confined optical modes. Thus, particles, such as quantum dots, can be included in the ink for optical quantum computing.

Tuneable, single-mode micro-lasers can be formed on-demand by adding a dye to the ink when printing microcavities. Highly-sensitive biosensors can be created by incorporating bioreceptors to the ink forming the microcavity. Any binding of a target analyte to the bioreceptors would result in a change of the cavity resonance. The resonance shift is proportional to the concentration of the analyte. The printing process can be used to locally deposit specific bioreceptors at specific locations of the photonic crystal template. Thus, multiple analytes can be detected in parallel by monitoring multiple resonances. Therefore, this process can be used to fabricate a lab-on-chip.

It will be appreciated that various modifications may be made to the embodiments hereinbefore described. Such modifications may involve equivalent and other features which are already known in the design, manufacture and use of photonic crystals and ultra-small volume inkjet printers and component parts thereof and which may be used instead of or in addition to features already described herein. Features of one embodiment may be replaced or supplemented by features of another embodiment.

For example, two lines of ink or a line of ink and a waveguide need not cross each other perpendicularly (i.e. at an angle of 90°). They may cross at other angles.

## Claims

1. A method of forming a photonic device comprising:
providing a two-dimensional photonic crystal layer (14) having a principal surface (15) and an array of optical scatterers (17) comprising holes extending into the photonic crystal layer from the principal surface; and
forming on the principal surface of the photonic crystal layer, over a region of the photonic crystal layer containing a plurality of optical scatterers of said array of optical scatterers, a layer (20) of material suitable for inkjet printing by inkjet printing so as to create defect(s) in the photonic bandgap, wherein forming the layer comprises:
forming a continuous layer (20₁) which spans said plurality of optical scatterers of said array of optical scatterers, or
forming a perforated layer (20₂) which goes around said plurality of optical scatterers of said array of optical scatterers, wherein said plurality of optical scatterers of said array of optical scatterers are not infiltrated with the material.

2. A method according to claim 1, wherein forming the layer comprises:
projecting one or more droplets (9) of an ink comprising the material onto the principal surface, the or each droplet having a volume less than 1 picolitre.

3. A method according to claim 1 or 2, comprising:
forming, over the region, a stack of at least two layers, by inkjet printing.

4. A method according to any preceding claim, wherein the layer is a first layer, the material is a first material, the region is a first region and said plurality of optical scatterers of said array of optical scatterers is a first plurality of optical scatterers of said array of optical scatterers, and wherein the method further comprises:
forming on the principal surface of the photonic crystal layer and/or the first layer, over a second region of the photonic crystal layer containing a second plurality of optical scatterers of said array of optical scatterers, a second layer of a second material by inkjet printing.

5. A method according to claim 4, wherein the first and second regions overlap and wherein the second layer of material overlaps the first layer of material.

6. A method according to claim 4, wherein the first region is surrounded by the second region.

7. A method according to claim 4, wherein the first and second regions are spaced apart by a distance so as to form first and second coupled microcavities.

8. A method according to any one of claims 1 to 7, wherein the photonic crystal layer comprises a uniform pattern of optical scatterers in a given area and wherein the region is contained in or overlaps the given area.

9. A method according to any one of claims 1 to 7, wherein the photonic crystal layer comprises a pattern of optical scatterers which defines a photonic waveguide and wherein the region overlaps the photonic waveguide.

10. A method of forming a photonic device comprising:
providing a two-dimensional array of optical scatterers (17') comprising pillars forming a two-dimensional photonic crystal, the pillars upstanding from an upper surface (15') of a base cladding layer (11), the base cladding layer having a refractive index, n_{bc}; and
forming on the upper surface of the base cladding layer first and second layers (20_{A}', 20_{B}') of first and second materials respectively which are suitable for inkjet printing by inkjet printing,
wherein the first layer (20_{A}') is inlaid in a window in the second layer (20_{B}') and contains a plurality of said pillars,
wherein the first and second layers are higher than the pillars,
wherein the first and second materials have first and second refractive indices, nₚₘ₁, nₚₘ₂, respectively, wherein the first refractive index is similar to the refractive index, n_{bc}, of the base cladding layer, and wherein nₚₘ₂ > nₚₘ₁ to create a defect in the photonic bandgap, and
wherein forming the first and second layers (20_{A}', 20_{B}') comprises filling-up void space between the pillars (17') with the first material (20_{A}') and the second material (20_{B}').

11. A photonic device comprising:
a two-dimensional photonic crystal layer (14) having a principal surface (15) and an array of optical scatterers (17) comprising holes extending into the photonic crystal layer from the principal surface; and
a layer of material suitable for inkjet printing (20) disposed on the principal surface of the photonic crystal layer by inkjet printing configured to create defect(s) in the photonic bandgap, the layer formed over a region of the photonic crystal layer containing a plurality of optical scatterers of said array of optical scatterers, wherein the layer comprises:
a continuous layer (20₁) which spans said plurality of optical scatterers of said array of optical scatterers, or
a perforated layer (20₂) which goes around said plurality of optical scatterers of said array of optical scatterers, wherein said plurality of optical scatterers of said array of optical scatterers are not infiltrated with the material.

12. A photonic device formed by the method of claim 10.

## Patentansprüche

1. Verfahren zum Bilden einer photonischen Vorrichtung, umfassend:
Bereitstellen einer zweidimensionalen photonischen Kristallschicht (14) mit einer Hauptoberfläche (15) und einer Anordnung optischer Streuer (17), die Löcher umfassen, die sich von der Hauptoberfläche in die photonische Kristallschicht erstrecken; und
auf der Hauptoberfläche der photonischen Kristallschicht über einer Region der photonischen Kristallschicht, welche eine Mehrzahl optischer Streuer der Anordnung optischer Streuer enthält, Bilden einer Schicht (20) aus einem Material, das sich für den Tintenstrahldruck mittels Tintenstrahldruck eignet, um einen bzw. mehrere Fehler in der photonischen Bandlücke zu erzeugen, wobei das Bilden der Schicht folgendes umfasst:
Bilden einer ununterbrochenen Schicht (20₁), welche sich über die Mehrzahl optischer Streuer der Anordnung optischer Streuer erstreckt; oder
Bilden einer perforierten Schicht (20₂), die um die Mehrzahl optischer Streuer der Anordnung optischer Streuer verläuft, wobei die Mehrzahl optischer Streuer der Anordnung optischer Streuer nicht mit dem Material infiltriert ist.

2. Verfahren nach Anspruch 1, wobei das Bilden der Schicht folgendes umfasst:
Sprühen eines oder mehrerer Tröpfchen (9) einer Tinte, die das Material umfasst, auf die Hauptoberfläche, wobei das oder jedes Tröpfchen ein Volumen von weniger als 1 Pikoliter aufweist.

3. Verfahren nach Anspruch 1 oder 2, umfassend:
Bilden eines Stapels aus mindestens zwei Schichten durch Tintenstrahldruck über der Region.

4. Verfahren nach einem der vorstehenden Ansprüche, wobei die Schicht eine erste Schicht ist, wobei das Material ein erstes Material ist, wobei die Region eine erste Region ist, und wobei die Mehrzahl optischer Streuer der Anordnung optischer Streuer eine erste Mehrzahl optischer Streuer der Anordnung optischer Streuer ist, und wobei das Verfahren ferner folgendes umfasst:
Bilden einer zweiten Schicht aus einem zweiten Material durch Tintenstrahldruck auf der Hauptoberfläche der photonischen Kristallschicht und/oder der ersten Schicht über einer zweiten Region der photonischen Kristallschicht, die eine zweite Mehrzahl optischer Streuer der Anordnung optischer Streuer aufweist.

5. Verfahren nach Anspruch 4, wobei sich die erste und die zweite Region überlappen, und wobei die zweite Materialschicht die erste Materialschicht überlappt.

6. Verfahren nach Anspruch 4, wobei die erste Region von der zweiten Region umgeben ist.

7. Verfahren nach Anspruch 4, wobei die erste und die zweite Region zwischen sich einen derartigen Abstand aufweisen, so dass eine erste und zweite gekoppelte Mikrokavität gebildet werden.

8. Verfahren nach einem der Ansprüche 1 bis 7, wobei die photonische Kristallschicht in einem bestimmten Bereich ein einheitliches Muster optischer Streuer aufweist, und wobei sich die Region in dem bestimmten Bereich befindet oder diesen überlappt.

9. Verfahren nach einem der Ansprüche 1 bis 7, wobei die photonische Kristallschicht ein Muster optischer Streuer umfasst, das einen photonischen Wellenleiter definiert, und wobei die Region den photonischen Wellenleiter überlappt.

10. Verfahren zum Bilden einer photonischen Vorrichtung, umfassend:
Bereitstellen einer zweidimensionalen Anordnung optischer Streuer (17'), die Säulen umfasst, die einen zweidimensionalen photonischen Kristall bilden, wobei die Säulen von einer oberen Oberfläche (15') einer Basismantelschicht (11) aufrecht vorstehen, wobei die Basismantelschicht einen Brechungsindex n_{bc} aufweist; und
Bilden auf der oberen Oberfläche der Basismantelschicht erster und zweiter Schichten (20_{A}', 20_{B}') aus entsprechenden ersten und zweiten Materialien, die sich für den Tintenstrahldruck mittels Tintenstrahldruck eignen,
wobei die erste Schicht (20_{A}') in ein Fenster in der zweiten Schicht (20_{B}') eingelegt ist und eine Mehrzahl der Säulen aufweist,
wobei die erste und die zweite Schicht höher sind als die Säulen,
wobei das erste und das zweite Material entsprechend einen ersten und zweiten Brechungsindex nₚₘ₁ und nₚₘ₂ aufweisen, wobei der erste Brechungsindex dem Brechungsindex n_{bc} der Basismantelschicht entspricht, und wobei nₚₘ₂ > nₚₘ₁ ist, um einen Fehler in der photonischen Bandlücke zu erzeugen; und
wobei das Bilden der ersten und zweiten Schicht (20_{A}', 20_{B}') das Auffüllen leeren Raums zwischen den Säulen (17') mit dem ersten Material (20_{A}') und dem zweiten Material (20_{B}') umfasst.

11. Photonische Vorrichtung, umfassend:
eine zweidimensionale photonische Kristallschicht (14) mit einer Hauptoberfläche (15) und einer Anordnung optischer Streuer (17), die Löcher umfassen, die sich von der Hauptoberfläche in die photonische Kristallschicht erstrecken; und
eine Materialschicht, die sich für den Tintenstrahldruck (20) eignet, die durch Tintenstrahldruck auf der Hauptoberfläche der photonischen Kristallschicht angeordnet wird, um einen bzw. mehrere Fehler in der photonischen Bandlücke zu erzeugen, wobei die über einer Region der photonischen Kristallschicht gebildete Schicht eine Mehrzahl optischer Streuer der Anordnung optischer Streuer aufweist, wobei die Schicht folgendes umfasst:
eine ununterbrochene Schicht (20₁), welche sich über die Mehrzahl optischer Streuer der Anordnung optischer Streuer erstreckt; oder
eine perforierte Schicht (20₂), die um die Mehrzahl optischer Streuer der Anordnung optischer Streuer verläuft, wobei die Mehrzahl optischer Streuer der Anordnung optischer Streuer nicht mit dem Material infiltriert ist.

12. Photonische Vorrichtung, die durch das Verfahren nach Anspruch 10 gebildet ist.

## Revendications

1. Procédé pour former un dispositif photonique comprenant les étapes consistant à :
fournir une couche de cristal photonique bidimensionnelle (14) ayant une surface principale (15) et un réseau de diffuseurs optiques (17) comprenant des trous s'étendant dans la couche de cristal photonique depuis la surface principale ; et
former sur la surface principale de la couche de cristal photonique, sur une région de la couche de cristal photonique contenant une pluralité de diffuseurs optiques dudit réseau de diffuseurs optiques, une couche (20) de matériau approprié pour l'impression par jet d'encre par impression par jet d'encre de sorte à créer un ou plusieurs défauts dans la largeur de bande interdite photonique, la formation de la couche comprenant les étapes consistant à :
former une couche continue (20₁) qui s'étend sur ladite pluralité de diffuseurs optiques dudit réseau de diffuseurs optiques, ou
former une couche perforée (20₂) qui entoure ladite pluralité de diffuseurs optiques dudit réseau de diffuseurs optiques, ladite pluralité de diffuseurs optiques dudit réseau de diffuseurs optiques n'étant pas infiltrés avec le matériau.

2. Procédé selon la revendication 1, la formation de la couche comprenant l'étape consistant à :
projeter une ou plusieurs gouttelettes (9) d'une encre comprenant le matériau sur la surface principale, la ou chaque gouttelette ayant un volume inférieur à 1 picolitre.

3. Procédé selon la revendication 1 ou 2, comprenant en outre l'étape consistant à :
former, sur la région, une pile d'au moins deux couches, par impression par jet d'encre.

4. Procédé selon l'une quelconque des revendications précédentes, la couche étant une première couche, le matériau étant un premier matériau, la région étant une première région et ladite pluralité de diffuseurs optiques dudit réseau de diffuseurs optiques étant une première pluralité de diffuseurs optiques dudit réseau de diffuseurs optiques, et le procédé comprenant en outre l'étape consistant à :
former sur la surface principale de la couche de cristal photonique et/ou de la première couche, sur une seconde région de la couche de cristal photonique contenant une seconde pluralité de diffuseurs optiques dudit réseau de diffuseurs optiques, une seconde couche d'un second matériau par impression par jet d'encre.

5. Procédé selon la revendication 4, les première et seconde régions se chevauchant et la seconde couche de matériau chevauchant la première couche de matériau.

6. Procédé selon la revendication 4, la première région étant entourée par la seconde région.

7. Procédé selon la revendication 4, les première et seconde régions étant espacées d'une distance afin de former des première et seconde microcavités couplées.

8. Procédé selon l'une quelconque des revendications 1 à 7, la couche de cristal photonique comprenant un motif uniforme de diffuseurs optiques dans une zone donnée et la région étant contenue dans ou chevauchant la zone donnée.

9. Procédé selon l'une quelconque des revendications 1 à 7, la couche de cristal photonique comprenant un motif de diffuseurs optiques qui définit un guide d'onde photonique et la région chevauchant le guide d'onde photonique.

10. Procédé pour former un dispositif photonique comprenant les étapes consistant à :
fournir un réseau bidimensionnel de diffuseurs optiques (17') comprenant des piliers formant un cristal photonique bidimensionnel, les piliers s'élevant à partir d'une surface supérieure (15') d'une couche de revêtement de base (11), la couche de revêtement de base ayant un indice de réfraction, n_{bc} ; et
former sur la surface supérieure de la couche de revêtement de base des première et seconde couches (20_{A}', 20_{B}') de premier et second matériaux respectivement qui conviennent à l'impression par jet d'encre par impression par jet d'encre,
la première couche (20_{A}') étant incrustée dans une fenêtre de la seconde couche (20_{B}') et contenant une pluralité desdits piliers,
les première et seconde couches étant plus hautes que les piliers,
les premier et second matériaux ayant des premier et second indices de réfraction, nₚₘ₁, nₚₘ₂, respectivement, le premier indice de réfraction étant similaire à l'indice de réfraction, n_{bc}, de la couche de revêtement de base, et nₚₘ₂ > nₚₘ₁ pour créer un défaut dans la largeur de bande interdite photonique, et
la formation des première et seconde couches (20_{A}', 20_{B}') comprenant le remplissage de l'espace vide entre les piliers (17') avec le premier matériau (20_{A}') et le second matériau (20_{B}').

11. Dispositif photonique comprenant :
une couche de cristal photonique bidimensionnelle (14) ayant une surface principale (15) et un réseau de diffuseurs optiques (17) comprenant des trous s'étendant dans la couche de cristal photonique depuis la surface principale ; et
une couche de matériau appropriée pour l'impression par jet d'encre (20) disposée sur la surface principale de la couche de cristal photonique par impression par jet d'encre conçue pour créer un ou plusieurs défauts dans la largeur de bande interdite photonique, la couche formée sur une région de la couche de cristal photonique contenant une pluralité de diffuseurs optiques dudit réseau de diffuseurs optiques, la couche comprenant :
une couche continue (20₁) qui s'étend sur ladite pluralité de diffuseurs optiques dudit réseau de diffuseurs optiques, ou
une couche perforée (20₂) qui entoure ladite pluralité de diffuseurs optiques dudit réseau de diffuseurs optiques, ladite pluralité de diffuseurs optiques dudit réseau de diffuseurs optiques n'étant pas infiltrés avec le matériau.

12. Dispositif photonique formé par le procédé selon la revendication 10.
